# EUROPEAN PATENT APPLICATION

(11) **EP 2 703 762 A2**
(43) Date of publication of application: **05.03.2014**
(21) Application number: 12777495.8
(22) Date of filing: 17.04.2012
(51) Int. Cl.: F28C 1/02, F28F 25/00

(54) **APPARATUS AND METHOD FOR EVAPORATION COOLING A COOLING FLUID**

(30) Priority: 27.04.2011 KR 20110039776
(71) Applicant: Kyungdong Navien Co., Ltd., Pyungtaek-si Gyunggi-do 450-818 (KR)
(72) Inventor: MIN, Tae Sik, Seoul 156-070 (KR)
(74) Representative: Habermann, Hruschka & Schnabel
(86) International application number: PCT/KR2012/002891
(87) International publication number: WO 2012/148111

(57) **Abstract**

Provided is an apparatus and method for evaporation cooling a cooling fluid that may maximize a cooling effect of the cooling fluid by repeatedly performing a method of reducing a cooling temperature of the cooling fluid by reducing a wet-bulb temperature of air introduced into an evaporative cooling unit by appropriately combining a sensible heat exchanging unit and the evaporative cooling unit in a cooling fluid cooling apparatus such as a cooling tower, and evaporatively cooling the cooling fluid vagain after reducing a relative humidity by increasing only a temperature of low-temperature saturated air that has passed through the evaporative cooling unit.

An apparatus for evaporation cooling a cooling fluid of the present invention includes: a plurality of sensible heat exchanging units in which sensible heat exchange occurs between the cooling fluid and air; and a plurality of evaporative cooling units that reduce temperatures of the cooling fluid and passing air using latent heat of vaporization of the cooling fluid, wherein the air alternately sequentially passes through the plurality of sensible heat exchanging units and the plurality of evaporative cooling units, and the cooling fluid passes in reverse order through the plurality of sensible heat exchanging units through which the air passes, and then passes in reverse order through the plurality of evaporative cooling units through which the air passes.

## Description

### Technical Field

The present invention relates to an apparatus and method for evaporation cooling a cooling fluid, and more particularly, to an apparatus and method for evaporation cooling a cooling fluid for obtaining water having a temperature lower than a wet-bulb temperature of ambient air using latent heat of vaporization of the water without an existing freezer that uses a refrigerant.

### Background Art

A freezer or an industrial heat exchanger in air conditioning equipment, a refrigeration apparatus, etc. produces waste heat that has to be removed, and in order to remove the waste heat, the waste heat has to be discharged to the atmosphere using a cooling medium. A cooling tower for cooling water using latent heat of vaporization of the water is known as an apparatus for supplying such a cooling medium.

Cooling methods of a cooling tower are classified into air-cooled cooling in which convection air whose temperature is lower than a temperature of a fluid to be cooled is circulated and evaporative cooling in which cooling is performed using latent heat of vaporization due to contact between cooling water and air. A cooling tower is currently widely used because the cooling tower is more economical and has a higher cooling effect than other cooling apparatuses.

A typical cooling tower is categorized as a counterflow cooling tower, a crossflow cooling tower, or a combination counterflow/crossflow cooling tower according to a flow type of cooling water and air.

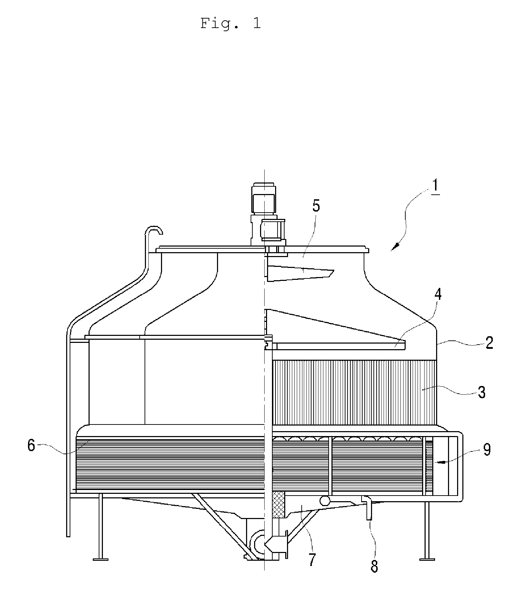

FIG. 1 is a schematic view of a conventional apparatus for evaporation cooling a cooling fluid, illustrating a cooling tower 1 disclosed in Korean Patent Publication No. 2003-0032240.

In the cooling tower 1, a vent fan 5 is provided in an upper portion of a main body 2, an evaporative cooling unit 3 is provided in a middle portion, and a sprinkler 4 for spraying a cooling fluid is provided over the evaporative cooling unit 3. Also, a water collecting tank 7 is provided in a lower portion of the main body 2, and a supplementary water pipe 8 for supplementing the consumed cooling fluid is provided in the water collecting tank 7.

The cooling tower 1 is configured such that when external air passes through the evaporative cooling unit 3 and a cooling fluid is sprayed by the sprinkler 4, the cooling fluid is evaporated and cooled while passing through the evaporative cooling unit 3. The cooling fluid evaporatively cooled in this process is sent to a cooling target apparatus to cool the target apparatus, and is circulated again repeatedly.

However, because the cooling tower 1 performs evaporative cooling by passing sucked external air through the evaporative cooling unit 3 to contact a cooling fluid sprayed by the sprinkler 4 and evaporating the cooling fluid, a cooling effect of the cooling fluid is limited to a wet-bulb temperature Twbi.

In order to solve this problem, the cooling tower 1 is configured such that a pre-cooler 9 is provided in a suction hole 6 of the main body 2, sucked external air is first cooled, and then the cooled external air is passed through the evaporative cooling unit 3 to evaporatively cool a cooling fluid. This configuration has a problem, however, in that since sucked air is pre-cooled using supplementary water, when there is no difference between a temperature of the supplementary water and a temperature of the cooling fluid or when the amount of evaporation is less than the total amount of circulation, the cooling fluid may not be effectively cooled.

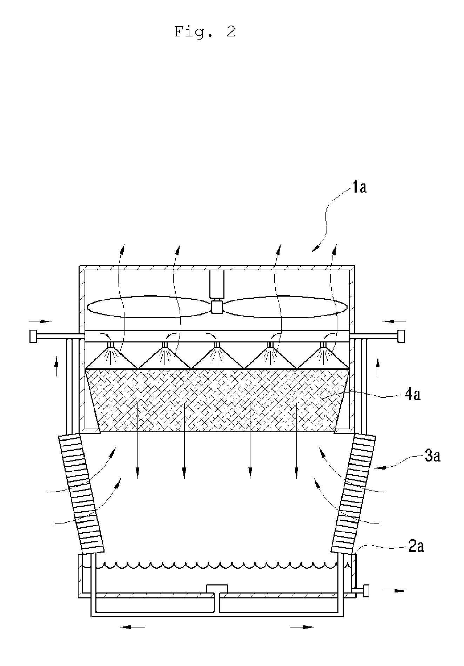

FIG. 2 is a schematic view of another conventional apparatus for evaporation cooling a cooling fluid, illustrating a cooling tower 1a disclosed in Korean Patent Publication No. 2005-0120275.

The cooling tower 1a is configured such that a sensible heat cooling unit 3a is provided at an inlet 2a of the cooling tower 1a, and part of cooled water is passed through the sensible heat cooling unit 3a to first cool sucked external air and is passed through an evaporative cooling unit 4a to reduce a temperature of a cooling fluid to a temperature equal to or lower than a wet-bulb temperature of the sucked external air using latent heat of vaporization of the cooling fluid.

However, this configuration of the cooling tower 1a has a problem in that since a relative humidity of the cooled air is actually increased even though an absolute humidity of the air passing through the sensible heat cooling unit 3a is constant, sufficient evaporation may not occur in the evaporative cooling unit 4a. Also, this configuration has a problem in that since the air passing through the evaporative cooling unit 4a has a saturated humidity but is discarded in a low temperature state, efficiency may be reduced, thereby leading to a waste of energy.

### Disclosure

### Technical Problem

The present invention is directed to providing an apparatus and method for evaporation cooling a cooling fluid that may maximize a cooling effect of the cooling fluid by repeatedly performing a method of reducing a cooling temperature of the cooling fluid by reducing a wet-bulb temperature of air introduced into an evaporative cooling unit by appropriately combining a sensible heat exchanging unit and the evaporative cooling unit in a cooling fluid cooling apparatus such as a cooling tower, and evaporatively cooling the cooling fluid again after reducing a relative humidity by increasing only a temperature of low-temperature saturated air that has passed through the evaporative cooling unit.

### Technical Solution

One aspect of the present invention provides an apparatus for evaporation cooling a cooling fluid, the apparatus including: a plurality of sensible heat exchanging units in which sensible heat exchange occurs between the cooling fluid and air; and a plurality of evaporative cooling units that reduce temperatures of the cooling fluid and passing air using latent heat of vaporization of the cooling fluid, wherein the air alternately sequentially passes through the plurality of sensible heat exchanging units and the plurality of evaporative cooling units, and the cooling fluid passes in reverse order through the plurality of sensible heat exchanging units through which the air passes, and then passes in reverse order through the plurality of evaporative cooling units through which the air passes.

In this case, the plurality of evaporative cooling units may include a first evaporative cooling unit, a second evaporative cooling unit, and a third evaporative cooling unit that are vertically disposed, and the plurality of sensible heat exchanging units may include a first sensible heat exchanging unit that is disposed at an air inlet of the third evaporative cooling unit, a second sensible heat exchanging unit that is disposed between an air outlet of the third evaporative cooling unit and an air inlet of the second evaporative cooling unit, a third sensible heat exchanging unit that is disposed between an air outlet of the second evaporative cooling unit and an air inlet of the first evaporative cooling unit, and a fourth sensible heat exchanging unit that is disposed at an air outlet of the first evaporative cooling unit.

Also, the air may sequentially pass through the first sensible heat exchanging unit, the third evaporative cooling unit, the second sensible heat exchanging unit, the second evaporative cooling unit, the third sensible heat exchanging unit, the first evaporative cooling unit, and the fourth sensible heat exchanging unit, and the cooling fluid may sequentially pass through the first sensible heat exchanging unit, the fourth sensible heat exchanging unit, the third sensible heat exchanging unit, and the second sensible heat exchanging unit, and then is sprayed into the first evaporative cooling unit by a spray apparatus to sequentially pass through the second evaporative cooling unit and the third evaporative cooling unit.

Also, the cooling fluid that has passed through the third evaporative cooling unit may be collected in a storage tank, is transferred by a circulation pump to cool a cooling target apparatus, and then may be returned to the first sensible heat exchanging unit.

Also, a dehumidification path that communicates with an external air inlet may be provided in an air introduction passage of the first sensible heat exchanging unit, and a dehumidification rotor for removing moisture included in external air supplied through the external air inlet may be provided in the dehumidification path.

Also, a regeneration path for regenerating the dehumidification rotor may be provided in parallel to the dehumidification path, and the dehumidification rotor may be disposed between the dehumidification path and the regeneration path.

Also, a heating unit and a regeneration fan that heat and supply air supplied to regenerate the dehumidification rotor may be provided in the regeneration path.

Also, a condenser of a refrigerant compression type cooling apparatus may be provided in the regeneration path, and an evaporator of the refrigerant compression type cooling apparatus may be provided in the storage tank.

Also, a supplementary cooling apparatus for further reducing a temperature of the cooling fluid that passes through the third evaporative cooling unit may be additionally provided at an inlet of the first sensible heat exchanging unit.

Another aspect of the present invention provides a method for evaporation cooling a cooling fluid, the method including operations of: (a) alternately sequentially passing air through a plurality of sensible heat exchanging units and a plurality of evaporative cooling units; and (b) passing the cooling fluid through the plurality of sensible heat exchanging units through which the air passes in reverse order, and then passing the cooling fluid through the plurality of evaporative cooling units through which the air passes in reverse order.

In this case, operation (a) may include: sensibly cooling external air used for evaporative cooling using a first sensible heat exchanging unit that is provided at an external air inlet; passing the sensibly cooled air through a third evaporative cooling unit to evaporatively cool the cooling fluid; raising a temperature of the air saturated by passing through the third evaporative cooling unit using a second sensible heat exchanging unit to reduce a relative humidity; passing the air whose temperature is increased and relative humidity is reduced by passing through the second sensible heat exchanging unit through a second evaporative cooling unit to evaporatively cool the cooling fluid; raising a temperature of the air saturated by passing through the second evaporative cooling unit using a third sensible heat exchanging unit to reduce a relative humidity; passing the air whose temperature is increased and relative humidity is reduced by passing through the third sensible heat exchanging unit through a first evaporative cooling unit to evaporatively cool the cooling fluid; and passing the air that has passed through the first evaporative cooling unit through a fourth sensible heat exchanging unit to cool the cooling fluid that passes through the fourth sensible heat exchanging unit.

Also, operation (b) may include: passing the cooling fluid that has cooled a cooling target apparatus through a first sensible heat exchanging unit to sensibly cool sucked external air; passing the cooling fluid whose temperature is increased by passing through the first sensible heat exchanging unit through a fourth sensible heat exchanging unit to reduce a temperature; passing the cooling fluid that has passed through the fourth sensible heat exchanging unit through a third sensible heat exchanging unit to further reduce a temperature; passing the cooling fluid that has passed through the third sensible heat exchanging unit through a second sensible heat exchanging unit to further reduce a temperature; spraying the cooling fluid that has passed through the second sensible heat exchanging unit to a first evaporative cooling unit using a spray apparatus to evaporatively cool the cooling fluid; passing the cooling fluid that has passed through the first evaporative cooling unit through a second evaporative cooling unit to further reduce a temperature of the cooling fluid; and passing the cooling fluid that has passed through the second evaporative cooling unit through a third evaporative cooling unit to further reduce a temperature of the cooling fluid.

Also, the sensible cooling of the external air used for the evaporative cooling using the first sensible heat exchanging unit that is provided at the external air inlet may be performed after air introduced through the external air inlet is dehumidified.

Also, the method may further include collecting the cooling fluid that has passed through the third evaporative cooling unit in a storage tank, and repeatedly cooling the cooling fluid using an evaporator of a refrigerant compression type cooling apparatus that is provided in the storage tank.

### Advantageous Effects

According to an apparatus and method for evaporation cooling a cooling fluid of the present invention, since a cooling temperature of a cooling fluid passing through an evaporative cooling unit is reduced by reducing a wet-bulb temperature of air introduced into the evaporative cooling unit by appropriately combining a plurality of sensible heat exchanging units and the evaporative cooling unit, and the cooling fluid is evaporated again after a relative humidity is reduced by increasing only a temperature of low-temperature saturated air that has passed through the evaporative cooling unit, when compared to a conventional cooling tower that cools water using latent heat of vaporization of the water, a waste of energy may be minimized and the cooling fluid may be cooled to a lower temperature.

### Description of Drawings

FIG. 1 is a schematic view of a conventional apparatus for evaporation cooling a cooling fluid.
FIG. 2 is a schematic view of another conventional apparatus for evaporation cooling a cooling fluid.
FIG. 3 is a schematic view illustrating a flow path of air in an apparatus for evaporation cooling a cooling fluid according to an embodiment of the present invention.
FIG. 4 is a schematic view illustrating a flow path of a cooling fluid in an apparatus for evaporation cooling a cooling fluid according to an embodiment of the present invention.
FIG. 5 is a schematic view illustrating an apparatus for evaporation cooling a cooling fluid according to another embodiment of the present invention.

### Description of Reference Numerals

10: first sensible heat exchanging unit
20: second sensible heat exchanging unit
30: third sensible heat exchanging unit
40: fourth sensible heat exchanging unit
50: first evaporative cooling unit
60: second evaporative cooling unit
70: third evaporative cooling unit
80: spray apparatus
90: storage tank
100: cooling water circulation pump
110: fan
120, 120a: external air inlet
130: vent hole
200: dehumidification rotor
205: dehumidification path
206: regeneration path
210; supplementary cooling apparatus
220: heater
230: regeneration fan
240: regeneration external air inlet
250: vent hole
300: refrigerant compression type cooling apparatus
310: compressor
320: condenser
330: expander
340: evaporator

### Modes of the Invention

Reference will now be made in detail to embodiments, examples of which are illustrated in the accompanying drawings.

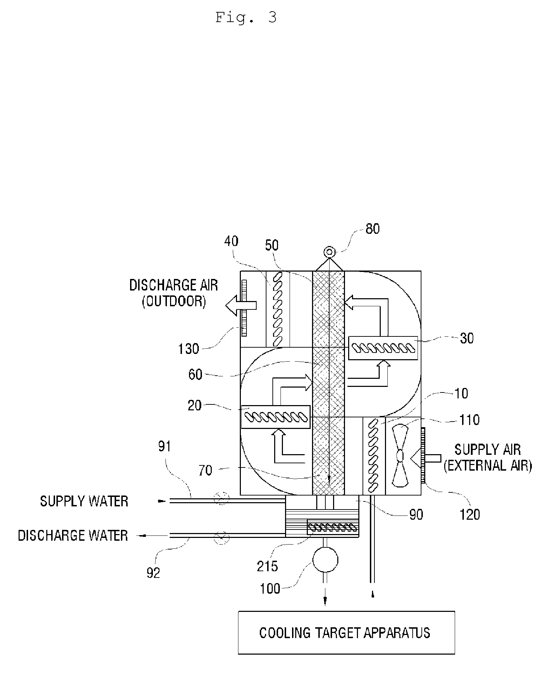

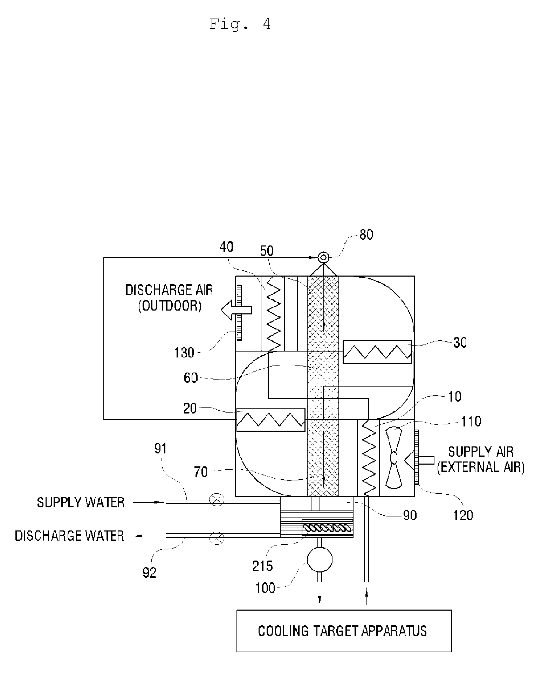

As shown in FIGS. 3 and 4, an apparatus for evaporation cooling a cooling fluid according to the present invention is divided into an air passage and a cooling fluid passage.

Referring to FIG. 3, the air passage is configured to sequentially pass through an external air inlet 120 that sucks external air into an air flow path, a fan 110 that causes air to flow, a first sensible heat exchanging unit 10 that sensibly cools the external air, a third evaporative cooling unit 70, a second sensible heat exchanging unit 20, a second evaporative cooling unit 60, a third sensible heat exchanging unit 30, a first evaporative cooling unit 50, and a fourth sensible heat exchanging unit 40, and then is discharged through a vent hole 130.

Referring to FIG. 4, a cooling fluid circulated after cooling a cooling target apparatus has a further increased temperature while passing through the first sensible heat exchanging unit 10 that sensibly cools external air, and then is cooled again while passing through the fourth sensible heat exchanging unit 40, the third sensible heat exchanging unit 30, and the second sensible heat exchanging unit 20. The sensibly cooled cooling fluid is sprayed to the first evaporative cooling unit 50 by a spray apparatus 80. The cooling fluid evaporatively cooled by air passing through the first evaporative cooling unit 50 is further cooled while sequentially passing through the second evaporative cooling unit 60 and the third evaporative cooling unit 70, and then is stored in a storage tank 90. The cooling fluid collected in the storage tank 90 is circulated to the cooling target apparatus by a cooling water circulation pump 100.

The cooling fluid passage is configured to sequentially pass through the first sensible heat exchanging unit 10, the fourth sensible heat exchanging unit 40, the third sensible heat exchanging unit 30, the second sensible heat exchanging unit 20, the spray apparatus 80, the first evaporative cooling unit 50, the second evaporative cooling unit 60, the third evaporative cooling unit 70, the storage tank 90, the cooling water circulation pump 100, and the cooling target apparatus.

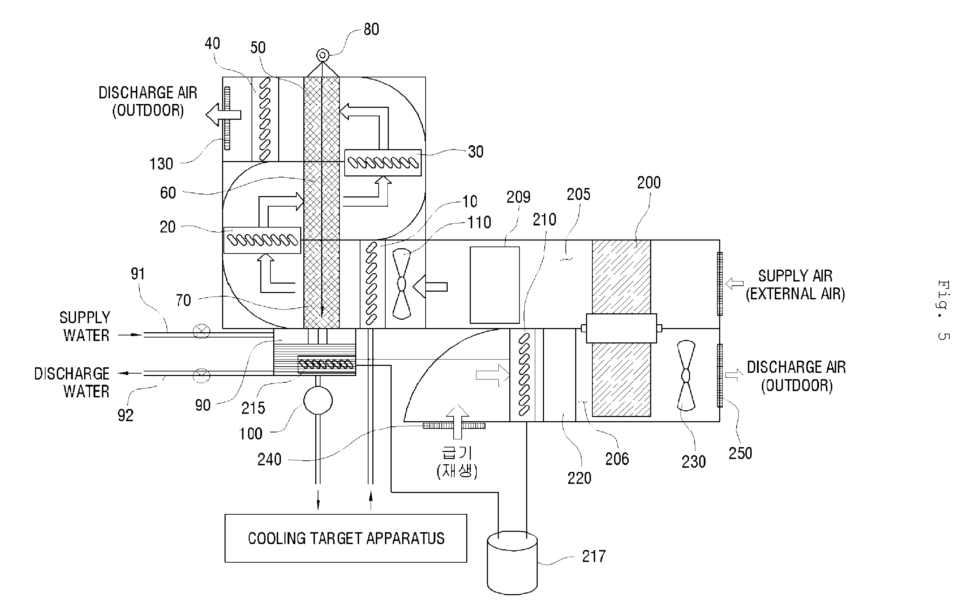

An apparatus for evaporation cooling a cooling fluid according to another embodiment of the present invention including all of the elements will be explained in more detail with reference to FIG. 5.

In the apparatus according to the present embodiment, a dehumidification path 205 for dehumidifying external air is provided in an air introduction passage that connects external air inlets 120a and 120, a regeneration path 206 for regenerating a dehumidification rotor 200 is provided in parallel to the dehumidification path 205, and the dehumidification rotor 200 is rotatably provided between the dehumidification path 205 and the regeneration path 206.

The dehumidification rotor 200 continuously absorbs moisture by absorbing moisture of air introduced through the external air inlet 120a in the dehumidification path 205 during rotation, and by being dried by external air in the regeneration path 206. A dehumidifying material such as silicagel or zeolite is contained in the dehumidification rotor 200. Since the dehumidifying material has a predetermined pattern (for example, a honeycomb pattern), a radius of the dehumidification rotor 200 has a length substantially corresponding to a width of each of the dehumidification path 205 and the regeneration path 206, and thus air flowing through the dehumidification path 205 and the regeneration path 206 passes through the dehumidification rotor 200.

Accordingly, when a part of the dehumidification rotor 200 that is rotating is located in a portion of the dehumidification path 205, the part of the dehumidification rotor 200 absorbs moisture of air in the portion, and when the part of the dehumidification rotor 200 that has absorbed the moisture is moved to the regeneration path 206 by continuously rotating, the part is dried again by external air. Such absorption and regeneration is repeated during rotation.

That is, air introduced through a regeneration external air inlet 240 provided at one end of the regeneration path 206 is absorbed by a regeneration fan 230, is changed to a high temperature state while passing through a condenser 320 that is a pre-heating unit and a heater 220 that is a heating unit, and then evaporating moisture adsorbed onto the dehumidification rotor 200 while passing through the regeneration path 206 to regenerate the dehumidification rotor 200 and to be discharged through a vent hole 250.

Supplied air that is introduced through the dehumidification path 205 and dehumidified to have a high temperature and low moisture while passing through the dehumidification rotor 200 is passing through the first sensible heat exchanging unit 10 by the fan 110, and is sensibly cooled with no increase in humidity by a circulated cooling fluid that has cooled the cooling target apparatus, and is supplied to the third evaporative cooling unit 70. That is, the air supplied to the third evaporative cooling unit 70 is supplied with a greatly reduced temperature.

In this case, a supplementary cooling apparatus 210 for cooling external air may be additionally provided in the dehumidification path 205.

Also, the cooling fluid is sensibly cooled while passing through the fourth sensible heat exchanging unit 40, the third sensible heat exchanging unit 30, and the second sensible heat exchanging unit 20, then is evaporatively cooled while passing through the first evaporative cooling unit 50 and the second evaporative cooling unit 60, and then is introduced into the third evaporative cooling unit 70 with a sufficiently reduced temperature. In this case, since the cooling fluid may be evaporated again while passing through the third evaporative cooling unit 70 and a temperature of the cooling fluid may be theoretically reduced to a dew point of inlet air, the cooling fluid may be used not only as cooling water for the cooling target apparatus but also as cold water for cooling when a humidity of the inlet air is sufficiently reduced using the dehumidification rotor 200.

Since the air that has passed through the third evaporative cooling unit 70 has a very low temperature but is saturated and thus is no longer used for evaporative cooling, in order to be used as air for second evaporative cooling, the air is passed through the second sensible heat exchanging unit 20 to increase a temperature and reduce a relative humidity.

Also, the cooling fluid increases a temperature of air that passes through the second sensible heat exchanging unit 20 while passing through the second sensible heat exchanging unit 20 to be further cooled, and is moved to the spray apparatus 80.

The air whose temperature is increased by passing through the second sensible heat exchanging unit 20 is introduced into the second evaporative cooling unit 60. The air evaporatively cools the cooling fluid that flows through the second evaporative cooling unit 60 while passing through the second evaporative cooling unit 60 to be saturated again, and is moved to the third sensible heat exchanging unit 30.

Also, the cooling fluid that has passed through the first evaporative cooling unit 50 is further evaporatively cooled while passing through the second evaporative cooling unit 60, and then is moved to the third evaporative cooling unit 70.

The saturated air moved to the third sensible heat exchanging unit 30 has an increased temperature and a reduced relative humidity due to heat exchange with the cooling fluid that passes through the third sensible heat exchanging unit 30.

Also, the cooling fluid increases a temperature of the air and is further cooled while passing through the third sensible heat exchanging unit 30, and then is moved to the second sensible heat exchanging unit 20.

The air whose temperature is increased by passing through the third sensible heat exchanging unit 30 is introduced into the first evaporative cooling unit 50. The air evaporatively cools the cooling fluid that flows through the first evaporative cooling unit 50 while passing through the first evaporative cooling unit 50 to be saturated again, and is moved to the fourth sensible heat exchanging unit 40.

Also, the cooling fluid is evaporatively cooled while passing through the first evaporative cooling unit 50, and is moved to the second evaporative cooling unit 60 for additional evaporative cooling.

Since the air that has passed through the first evaporative cooling unit 50 has a saturated humidity and thus is no longer used for evaporative cooling, but has a sufficiently low temperature when compared to that of external air, the air is, without being directly discharged, passes through the fourth sensible heat exchanging unit 40 to cool the cooling fluid that passes through the fourth sensible heat exchanging unit 40 and then is discharged to the outside.

This will be explained in detail according to an order in which a cooling fluid flows.

Referring to FIG. 4, a cooling fluid returned after cooling the cooling target apparatus sensibly cools external air while passing through the first sensible heat exchanging unit 10 to have a further increased temperature, and then is moved to the fourth sensible heat exchanging unit 40.

The cooling fluid moved to the fourth sensible heat exchanging unit 40 is cooled by air that has passed through the first evaporative cooling unit 50, is further cooled by air that has passed through the second evaporative cooling unit 60 while passing through the third sensible heat exchanging unit 30, and then is further cooled by air that has passed through the third evaporative cooling unit 70 while passing through the second sensible heat exchanging unit 20.

The cooling fluid sensibly cooled while passing through the fourth sensible heat exchanging unit 40, the third sensible heat exchanging unit 30, and the second sensible heat exchanging unit 20 is sprayed to the first evaporative cooling unit 50 by the spray apparatus 80. The cooling fluid evaporatively cooled by air that passes through the first evaporative cooling unit 50 is evaporatively cooled by air that passes through the second evaporative cooling unit 60 and the third evaporative cooling unit 70 while passing through the second evaporative cooling unit 60 and the third evaporative cooling unit 70, and then is stored in the storage tank 90.

A water supply line 91 for supplementing evaporable water evaporated in the evaporative cooling units 50, 60, and 70 and a water drain line 92 for discharging water during non-use or abnormality are provided in the storage tank 90.

Also, as shown in FIG. 5, a refrigerant compression type cooling apparatus 300 including a compressor 310, a condenser 320, an expander 330, and an evaporator 340 is additionally provided. The condenser 320 may be provided close to an inlet of the regeneration path 206 and may be used to pre-heat regeneration air for regenerating the dehumidification rotor 200, and the evaporator 340 may be provided in the storage tank 90 and may be used to further cool the cooling fluid in the storage tank 90.

Also, part of air having a low temperature that has passed through the evaporative cooling units 50, 60, and 70 may be separated and used for indoor cooling.

While the one or more embodiments of the present invention have been particularly shown and described, it will be understood by one of ordinary skill in the art that various changes in form and details may be made therein without departing from the spirit and scope of the present invention as defined by the following claims.

Accordingly, the invention may be embodied in different forms and should not be construed as limited to the embodiments set forth herein. Rather, these embodiments are provided so that this disclosure will be thorough and complete, and will fully convey the scope of the invention to one of ordinary skill in the art, and the scope of the present invention is defined by the appended claims.

## Claims

1. An apparatus for evaporation cooling a cooling fluid, the apparatus comprising:
a plurality of sensible heat exchanging units in which sensible heat exchange occurs between the cooling fluid and air; and
a plurality of evaporative cooling units that reduce temperatures of the cooling fluid and passing air using latent heat of vaporization of the cooling fluid,
wherein the air alternately sequentially passes through the plurality of sensible heat exchanging units and the plurality of evaporative cooling units, and
the cooling fluid passes in reverse order through the plurality of sensible heat exchanging units through which the air passes, and then passes in reverse order through the plurality of evaporative cooling units through which the air passes.

2. The apparatus of claim 1, wherein the plurality of evaporative cooling units comprise a first evaporative cooling unit, a second evaporative cooling unit, and a third evaporative cooling unit that are vertically disposed, and
the plurality of sensible heat exchanging units comprise a first sensible heat exchanging unit that is disposed at an air inlet of the third evaporative cooling unit, a second sensible heat exchanging unit that is disposed between an air outlet of the third evaporative cooling unit and an air inlet of the second evaporative cooling unit, a third sensible heat exchanging unit that is disposed between an air outlet of the second evaporative cooling unit and an air inlet of the first evaporative cooling unit, and a fourth sensible heat exchanging unit that is disposed at an air outlet of the first evaporative cooling unit.

3. The apparatus of claim 2, wherein the air sequentially passes through the first sensible heat exchanging unit, the third evaporative cooling unit, the second sensible heat exchanging unit, the second evaporative cooling unit, the third sensible heat exchanging unit, the first evaporative cooling unit, and the fourth sensible heat exchanging unit, and
the cooling fluid sequentially passes through the first sensible heat exchanging unit, the fourth sensible heat exchanging unit, the third sensible heat exchanging unit, and the second sensible heat exchanging unit, and then is sprayed into the first evaporative cooling unit by a spray apparatus to sequentially pass through the second evaporative cooling unit and the third evaporative cooling unit.

4. The apparatus of claim 3, wherein the cooling fluid that has passed through the third evaporative cooling unit is collected in a storage tank, is transferred by a circulation pump to cool a cooling target apparatus, and then is returned to the first sensible heat exchanging unit.

5. The apparatus of claim 4, wherein a dehumidification path that communicates with an external air inlet is provided in an air introduction passage of the first sensible heat exchanging unit, and a dehumidification rotor for removing moisture included in external air supplied through the external air inlet is provided in the dehumidification path.

6. The apparatus of claim 5, wherein a regeneration path for regenerating the dehumidification rotor is provided in parallel to the dehumidification path, and the dehumidification rotor is disposed between the dehumidification path and the regeneration path.

7. The apparatus of claim 6, wherein a heating unit and a regeneration fan that heat and supply air supplied to regenerate the dehumidification rotor are provided in the regeneration path.

8. The apparatus of claim 7, wherein a condenser of a refrigerant compression type cooling apparatus is provided in the regeneration path, and
an evaporator of the refrigerant compression type cooling apparatus is provided in the storage tank.

9. The apparatus of claim 3, wherein a supplementary cooling apparatus for further reducing a temperature of the cooling fluid that passes through the third evaporative cooling unit is additionally provided at an inlet of the first sensible heat exchanging unit.

10. A method for evaporation cooling a cooling fluid, the method comprising operations of:
(a) alternately sequentially passing air through a plurality of sensible heat exchanging units and a plurality of evaporative cooling units; and
(b) passing the cooling fluid through the plurality of sensible heat exchanging units through which the air passes in reverse order, and then passing the cooling fluid through the plurality of evaporative cooling units through which the air passes in reverse order.

11. The method of claim 10, wherein operation (a) comprises:
sensibly cooling external air used for evaporative cooling using a first sensible heat exchanging unit that is provided at an external air inlet;
passing the sensibly cooled air through a third evaporative cooling unit to evaporatively cool the cooling fluid;
raising a temperature of the air saturated by passing through the third evaporative cooling unit using a second sensible heat exchanging unit to reduce a relative humidity;
passing the air whose temperature is increased and relative humidity is reduced by passing through the second sensible heat exchanging unit through a second evaporative cooling unit to evaporatively cool the cooling fluid;
raising a temperature of the air saturated by passing through the second evaporative cooling unit using a third sensible heat exchanging unit to reduce a relative humidity;
passing the air whose temperature is increased and relative humidity is reduced by passing through the third sensible heat exchanging unit through a first evaporative cooling unit to evaporatively cool the cooling fluid; and
passing the air that has passed through the first evaporative cooling unit through a fourth sensible heat exchanging unit to cool the cooling fluid that passes through the fourth sensible heat exchanging unit.

12. The method of claim 10 or 11, wherein operation (b) comprises:
passing the cooling fluid that has cooled a cooling target apparatus through a first sensible heat exchanging unit to sensibly cool sucked external air;
passing the cooling fluid whose temperature is increased by passing through the first sensible heat exchanging unit through a fourth sensible heat exchanging unit to reduce a temperature;
passing the cooling fluid that has passed through the fourth sensible heat exchanging unit through a third sensible heat exchanging unit to further reduce a temperature;
passing the cooling fluid that has passed through the third sensible heat exchanging unit through a second sensible heat exchanging unit to further reduce a temperature;
spraying the cooling fluid that has passed through the second sensible heat exchanging unit to a first evaporative cooling unit using a spray apparatus to evaporatively cool the cooling fluid;
passing the cooling fluid that has passed through the first evaporative cooling unit through a second evaporative cooling unit to further reduce a temperature of the cooling fluid; and
passing the cooling fluid that has passed through the second evaporative cooling unit through a third evaporative cooling unit to further reduce a temperature of the cooling fluid.

13. The method of claim 11, wherein the sensible cooling of the external air used for the evaporative cooling using the first sensible heat exchanging unit that is provided at the external air inlet is performed after air introduced through the external air inlet is dehumidified.

14. The method of claim 12, further comprising collecting the cooling fluid that has passed through the third evaporative cooling unit in a storage tank, and repeatedly cooling the cooling fluid using an evaporator of a refrigerant compression type cooling apparatus that is provided in the storage tank.
